(19) Europäisches Patentamt
European Patent Office
Office européen des brevets

(11) **EP 2 828 138 B1**

(12) **FASCICULE DE BREVET EUROPEEN**

(45) Date de publication et mention de la délivrance du brevet:
**18.05.2016 Bulletin 2016/20**

(21) Numéro de dépôt: **13713787.3**

(22) Date de dépôt: **20.03.2013**

(51) Int Cl.:
***B61L 25/02*** *(2006.01)*      ***G01P 3/44*** *(2006.01)*

(86) Numéro de dépôt international:
**PCT/EP2013/055855**

(87) Numéro de publication internationale:
**WO 2013/139869 (26.09.2013 Gazette 2013/39)**

(54) **PROCÉDÉ DE CONTRÔLE DU FONCTIONNEMENT D'UN SYSTÈME DE POSITIONNEMENT D'UN TRAIN**

VERFAHREN ZUR STEUERUNG DES BETRIEBS EINES ZUGPOSITIONIERUNGSSYSTEMS

METHOD FOR CONTROLLING THE OPERATION OF A POSITIONING SYSTEM OF A TRAIN

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.03.2012 FR 1252487**

(43) Date de publication de la demande:
**28.01.2015 Bulletin 2015/05**

(73) Titulaire: **ALSTOM Transport Technologies 92300 Levallois-Perret (FR)**

(72) Inventeur: **ORION, Jacques**
**38200 Vienne (FR)**

(74) Mandataire: **Blot, Philippe Robert Emile**
**Cabinet Lavoix**
**2, place d'Estienne d'Orves**
**75441 Paris Cedex 09 (FR)**

(56) Documents cités:
**EP-A1- 0 359 422        EP-A1- 1 475 292**
**DE-A1- 10 030 487       DE-A1- 10 333 973**
**DE-A1-102006 047 365**

EP 2 828 138 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne un procédé de contrôle du fonctionnement d'un système de positionnement d'un train. Il est également proposé un véhicule ferroviaire comportant un dispositif adapté à mettre en oeuvre le procédé.

Pour éviter qu'une collision entre deux trains survienne et garantir que l'espace entre deux trains soit suffisant, il est nécessaire de connaître la position du train sur la voie. Il est donc souhaitable de disposer d'un système de positionnement de train assurant une bonne sécurité.

Il est connu des systèmes de positionnement d'un train utilisant une roue phonique reliée à un essieu. La roue est dentée et coopère avec quatre capteurs de détection de la présence d'une dent, les quatre capteurs étant portés par le véhicule. Trois des quatre capteurs sont agencés de manière à pouvoir obtenir un positionnement du train sur la base de la détection de la présence ou de l'absence d'une dent de la roue phonique. Le quatrième capteur est un capteur dit de « cohérence » qui contrôle le bon fonctionnement du système de positionnement lorsque le train est en mouvement. Le quatrième capteur est usuellement en phase avec le premier capteur. Un test est également mené à l'arrêt pour s'assurer du bon fonctionnement du système.

Cependant, ce quatrième capteur peut tomber en panne. En outre, l'achat d'un quatrième capteur spécifique et d'une unité pouvant effectuer le test à l'arrêt s'avère onéreux. Il est, de ce fait, désiré de s'affranchir de l'emploi de ce quatrième capteur et de l'unité effectuant le test tout en garantissant la même fiabilité du système du positionnement d'un train.

Le document EP 1 475 292 A1 décrit une méthode et un dispositif pour la détection des erreurs dans la succession d'impulsions.

Il existe donc un besoin pour procédé de contrôle du fonctionnement d'un système de positionnement d'un train qui soit plus facile à mettre en oeuvre.

Pour cela, l'invention propose un procédé de contrôle du fonctionnement d'un système de positionnement d'un train, le système comportant une roue phonique dentée, un premier capteur de détection de la présence d'une dent, un deuxième capteur de détection de la présence d'une dent et un troisième capteur de détection de la présence d'une dent, les trois capteurs étant agencés spatialement de manière à ce qu'au moins six positions possibles et différentes de la roue soient représentables par au moins six états logiques possibles des trois capteurs, les six états étant différents. Le procédé comportant une étape de détection d'états correspondants aux signaux délivrés par les trois capteurs.

Le procédé comprend aussi les étapes de comparaison des états détectés avec les six états logiques possibles, et de détermination de l'état de fonctionnement du système en fonction de la comparaison.

Selon d'autres caractéristiques de l'invention, prises séparément ou en combinaison :

- il est renvoyé une anomalie de fonctionnement du système à l'étape de détermination lorsque l'état détecté n'est pas un des six états logiques.
- le passage d'un état logique à un autre est régi par des relations de passage et le procédé comporte en outre une étape de vérification de la conformité de la succession des états détectés avec les relations de passage,
- il est renvoyé une anomalie de fonctionnement du système à l'étape de détermination lorsque la succession des états détectés n'est pas conforme aux relations de passage,
- les six états logiques consécutifs sont repérés par des entiers successifs, les relations de passages étant D2 = (D1 - 1 $\pm$ 1) [6] +1 avec D1 et D2 les numéros des états détectés et [ ] est l'opération mathématique modulo.
- chaque capteur présente un rapport cyclique, le premier capteur et le deuxième capteur sont décalés d'un premier décalage par rapport à une dent dans un sens de rotation, le deuxième capteur et le troisième capteur sont décalés d'un deuxième décalage par rapport à une dent dans le même sens de rotation chaque décalage vaut 120° $\pm$ x, x étant compris entre 0 et 60°,
- le rapport cyclique de chaque capteur est compris entre (180 - x)/360 et (180 + x)/360,
- l'étape de détection d'un état se déclenche en présence d'un front montant ou descendant sur l'un des trois signaux délivrés par les capteurs,
- les états possibles, sont représentés par un triplet de valeurs correspondant aux états logiques des capteurs,
- les états logiques des capteurs comprennent un état haut et un état bas,
- chaque triplet de valeurs inclut un front montant ou descendant pour une valeur, un état haut ou un état bas pour les autres valeurs, et
- le système comporte en outre au moins un détecteur de l'état de fonctionnement des capteurs et dans lequel il est renvoyé une anomalie de fonctionnement du système à l'étape de détermination lorsque le détecteur détecte un dysfonctionnement d'un des capteurs.

L'invention a également pour objet un système comportant en outre au moins un moyen de mesure de l'accélération du train et dans lequel il est renvoyé une anomalie de fonctionnement du système à l'étape de détermination lorsque l'accélération mesurée par le moyen de mesure est supérieure à une valeur seuil.

L'invention a également pour objet un système de positionnement d'un train comportant une roue phonique dentée, un premier capteur de détection de la présence d'une dent, un deuxième capteur de détection de la présence d'une dent, et un troisième capteur de détection de la présence d'une dent, les trois capteurs étant agencés spatialement de manière à ce qu'au moins six positions possibles et différentes de la roue soient représentables par au moins six états logiques possibles des trois capteurs, les six états étant différents.

Le système comprend aussi un dispositif de contrôle du positionnement adapté à mettre en oeuvre le procédé tel que précédemment décrit.

L'invention comporte également un véhicule ferroviaire comportant le système de positionnement tel que décrit précédemment.

D'autres caractéristiques et avantages de l'invention apparaîtront à la lecture de la description détaillée qui suit des modes de réalisation de l'invention, donnés à titre d'exemple uniquement et en référence aux dessins qui montrent :

- figure 1, une vue schématique d'un exemple de système de positionnement d'un train ;
- figure 2, un graphique présentant l'évolution temporelle des signaux délivrés par les différents capteurs et des états logiques des capteurs associés ;
- figure 3, un ordinogramme d'un exemple de procédé de contrôle du fonctionnement d'un système de positionnement d'un train ;
- figure 4, un ordinogramme d'un autre exemple de procédé de contrôle du fonctionnement d'un système de positionnement d'un train, et
- figure 5, un graphique présentant l'évolution temporelle des signaux délivrés par les différents capteurs et des états logiques des capteurs associés.

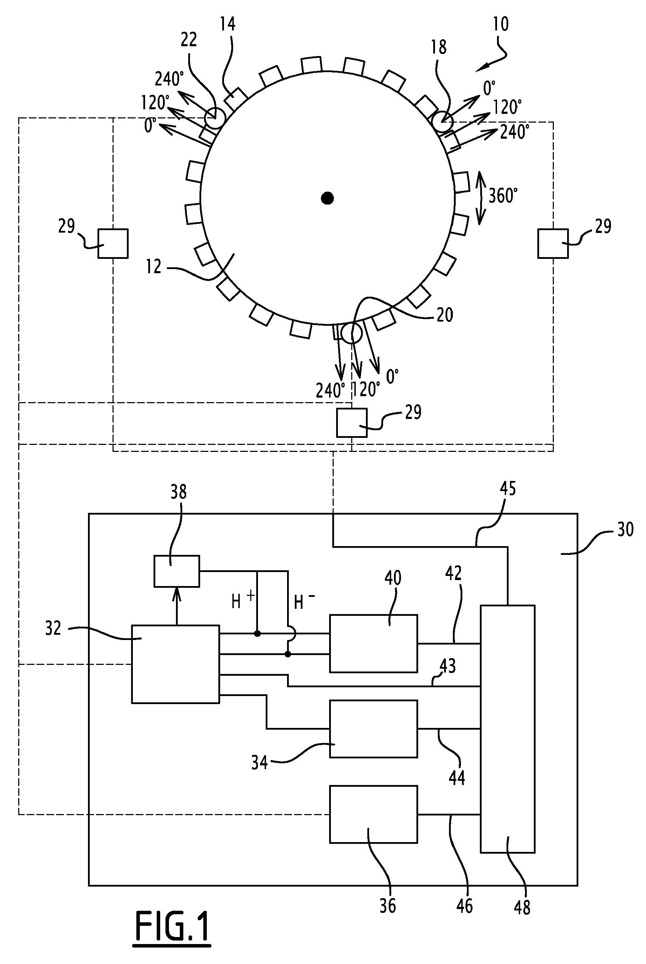

Un système 10 de positionnement d'un train est représenté schématiquement à la figure 1. Le système 10 comporte une roue 12 phonique dentée. La roue 12 phonique dentée est pourvue de dents 14 espacées angulairement. Pour faciliter le repérage, certaines dents 14 sont omises sur une partie de la périphérie de la roue 12. La roue 12 est fixée à un arbre d'une roue de train. La roue 12 est ainsi solidaire de la roue de train. Les deux roues tournent donc à la même vitesse. La roue 12 est ainsi représentative du mouvement de la roue de train.

Le système comporte également un premier capteur 18, un deuxième capteur 20 et un troisième capteur 22 de détection de la présence d'une dent 14. Dans le cas de la figure 1, les capteurs 18, 20 et 22 sont des photodiodes. Tout autre capteur permettant la détection de la présence d'une dent 14 est envisageable.

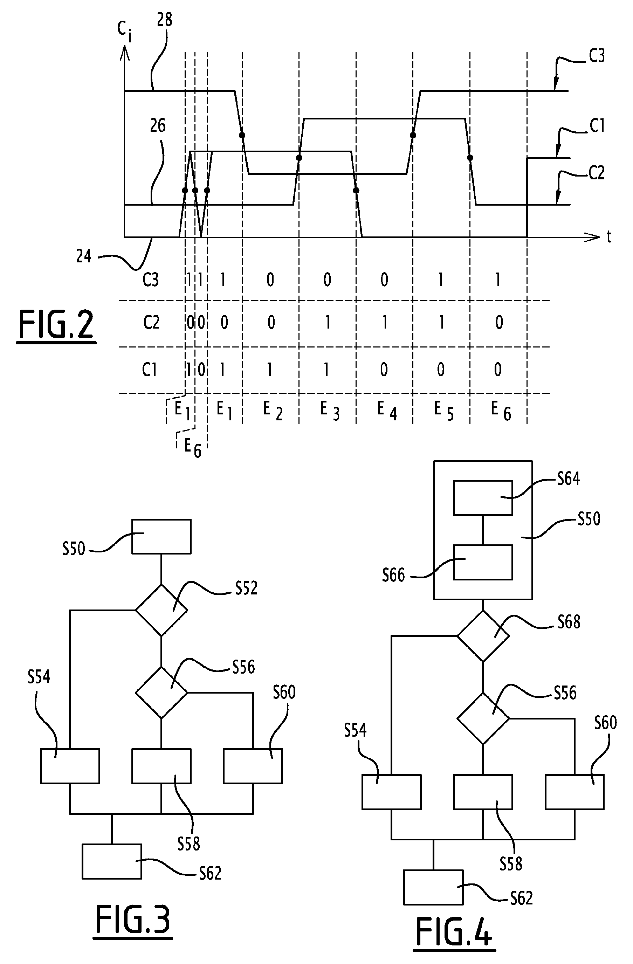

Les trois capteurs 18, 20 et 22 délivrent des signaux représentatifs de la présence ou de l'absence d'une dent 14. Il en résulte que chacun des capteurs 18, 20 ou 22 a deux états logiques, l'un représentatif de la présence d'une dent 14 et l'autre représentatif de l'absence d'une dent 14. Les trois capteurs 18, 20 et 22 sont fixes par rapport au train et suivent donc son mouvement. Comme la roue 12 suit un mouvement de rotation, la roue 12 est en rotation par rapport aux capteurs 18, 20 et 22. Ceux-ci détectent ainsi une succession de dents 14 de la roue 12 au cours du temps. Cela est schématiquement illustré par la figure 2. Dans cette figure, il est représenté l'évolution temporelle des signaux délivrés par les différents capteurs 18, 20 et 22 en fonctionnement normal de la roue 12. Plus précisément, la courbe 24 représente l'évolution temporelle du signal délivré par le premier capteur 18, la courbe 26, celle du deuxième capteur 20 et la courbe 28, celle du troisième capteur 22. Pour améliorer la clarté, les courbes 24, 26 et 28 ont été décalées vers le haut, étant entendu qu'en réalité, les niveaux correspondants sont sensiblement les mêmes.

A l'étude de la courbe 24, il apparaît que le premier capteur 18 peut se trouver dans deux états logiques selon la situation considérée : un état bas correspondant au cas de détection de l'absence d'une dent 14, un état haut correspondant au cas de détection de la présence d'une dent 14. Dans la suite, en notant C1 l'état logique du premier capteur 18, l'état bas correspondra à C1 = 0 et l'état haut à C1 =1. Une logique inversée est également possible, les idées développées ci-dessous demeurant les mêmes. De manière similaire, le deuxième capteur 20 et le troisième capteur 22 ont chacun deux états logiques : un état bas et un état haut. En outre, en notant C2 l'état du deuxième capteur et C3 l'état du troisième capteur, C2 = 0 et C3 = 0 sont les états bas correspondant à une absence de détection d'une dent 14 alors que C2 = 1 et C3 = 1 sont les états haut correspondant à la détection de la présence d'une dent 14.

Les trois capteurs 18, 20 et 22 sont agencés spatialement de manière à ce que les six positions possibles et différentes de la roue 12 soient représentables par six états logiques des trois capteurs 18, 20 et 22, les six états logiques étant différents. Un état logique possible est donc la donnée des valeurs de chaque signal délivré par les trois capteurs 18, 20 et 22. Cela correspond à la donnée d'un triplet (C1, C2, C3). Il en résulte que la donnée du triplet (C1, C2, C3) permet de caractériser une position de la roue 12.

En observant la figure 2, il apparaît que la position de la roue 12 est représentable par six états. Ces six états sont notés $E_1$, $E_2$, $E_3$, $E_4$, $E_5$ et $E_6$. L'état $E_1$ correspond au triplet (C1 = 1, C2 = 0, C3 = 1) ; l'état $E_2$ au triplet (C1 = 1, C2 = 0, C3 = 0) ; l'état $E_3$ au triplet (C1 = 1, C2 = 1, C3 = 0) ; l'état $E_4$ au triplet (C1 = 0, C2 = 1, C3 = 0) ; l'état $E_5$ au triplet (C1 = 0, C2 = 1, C3 = 1) et l'état $E_6$ au triplet (C1 = 0, C2 = 0, C3 = 1). L'ensemble des états $E_1$ à $E_6$ forme

l'ensemble des états logiques possibles des trois capteurs 18, 20 et 22 pour les différentes positions de la roue 12. L'ensemble des états peut être représenté sous forme du tableau 1 suivant, ainsi que cela apparaît à la figure 2 :

*Tableau 1 : Valeurs logiques des capteurs 18, 20 et 22 en fonction des états de la roue 12 (premier mode de réalisation).*

| Etat | C1 | C2 | C3 |
|------|-----|-----|-----|
| $E_1$ | 1 | 0 | 1 |
| $E_2$ | 1 | 0 | 0 |
| $E_3$ | 1 | 1 | 0 |
| $E_4$ | 0 | 1 | 0 |
| $E_5$ | 0 | 1 | 1 |
| $E_6$ | 0 | 0 | 1 |

Les trois capteurs 18, 20 et 22 sont agencés spatialement de manière à ce que les six positions possibles et différentes de la roue 12 soient représentables par six états logiques différents des trois capteurs 18, 20 et 22 lorsque trois conditions sont remplies. Le premier capteur 18 et le deuxième capteur 20 sont décalés d'un premier décalage D1 par rapport à une dent 14 dans un sens de rotation (première condition) ; le deuxième capteur 20 et le troisième capteur 22 sont décalés d'un deuxième décalage D2 par rapport à une dent 14 dans un sens de rotation (deuxième condition) et le troisième capteur 22 et le premier capteur 18 sont décalés d'un troisième décalage D3 par rapport à une dent 14 dans un sens de rotation (condition 3). Selon l'exemple considéré, le sens de rotation est le sens de rotation des aiguilles d'une montre (sens dit positif). En outre, par convention, 360° correspond à l'écart entre deux dents de la roue dentée, ce qui implique que la somme des trois décalages est égale à 360°. Cela s'écrit mathématiquement D1 + D2 + D3 = 360°. A titre d'exemple, les décalages D1, D2 et D3 s'expriment en degrés et sont compris entre 0 et 360°. De plus, les trois décalages D1, D2 et D3 sont non nuls. Cela s'écrit mathématiquement : D1 $\neq$ 0, D2 $\neq$ 0 et D3 $\neq$ 0.

Ainsi, la troisième condition s'exprime également par le fait que la somme du premier décalage D1 et du deuxième décalage D2 est différente de 360°. Cela s'écrit mathématiquement D1 + D2 $\neq$ 360°.

Selon l'exemple de la figure 1, chaque capteur 18, 20 et 22 présente le même rapport cyclique de 50%. Il existe alors une tolérance sur les décalages D1, D2 et D3 qui sont connus à $\pm$ 60° près.

Réciproquement, lorsque les décalages D1, D2 et D3 sont fixés à des multiples de 60° ; le rapport cyclique des capteurs 18, 20 et 22 varie entre 1/3 et 2/3.

Il est entendu qu'entre ces deux cas extrêmes, des compromis existent. Ainsi, si le décalage D1, D2 et D3 est connu à $\pm$ 30° près, le rapport cyclique des capteurs est compris entre (180-30)/360 = 41,6% et (180+30)/ 360 = 58,3%.

Plus généralement, pour un décalage connu à $\pm$ x° près, le rapport cyclique des capteurs est compris entre (180-x)/ 360 et (180+x)/ 360.

Dans le cadre du mode de réalisation de la figure 1, x est compris entre 0 et 60°.

De préférence, comme c'est le cas pour la figure 1, le premier décalage D1 et le deuxième décalage D2 sont de 120°. Cela s'écrit mathématiquement D1 = D2 = 120°. Il en résulte que le troisième capteur 22 et le premier capteur 18 sont décalés de 120° par rapport à une dent 14 dans le même sens de rotation. Cela s'exprime par l'égalité mathématique D3 = 120°. Cela permet notamment qu'un changement d'état indique un mouvement d'un sixième de dent 14. Pour illustrer schématiquement ces trois décalages D1, D2 et D3 égaux à 120° sur la figure 1, le premier capteur 18 est placé sur une flèche correspondant à 0°, le deuxième capteur 20 est placé sur une flèche correspondant à 120° et le troisième capteur 22 est placé sur une flèche correspondant à 240°.

Les décalages D1, D2 et D3 de 120° sont également perceptibles sur la figure 2. En effet, en temporel, pour des dents 14 régulièrement espacées (rapport cyclique de 50%), cela signifie que les signaux délivrés par les capteurs 18, 20 et 22 correspondants sont décalés d'un tiers de période. Il existe bien un décalage d'un tiers de période entre la courbe 24 et la courbe 26 ; un tiers de période entre la courbe 26 et la courbe 28 et un tiers de période entre la courbe 28 et la courbe 24.

Les signaux délivrés par les trois capteurs 18, 20 et 22 sont des signaux exploités par un dispositif 30 de contrôle du système de positionnement. Ce dispositif 30 est adapté à mettre en oeuvre un procédé de contrôle du fonctionnement du système 10 de positionnement de train.

Le système 10 comporte en outre un détecteur 29 électrique pour chaque capteur 18, 20 et 22, soit trois détecteurs 29.

Selon le mode de fonctionnement des capteurs 18, 20 et 22 à savoir tension et/ou courant, le détecteur 29 est propre à détecter des circuits ouverts ou en court-circuit. Plus précisément, en mode de fonctionnement en tension, un état bas du capteur 18 correspond à une tension non nulle, par exemple 5V alors qu'un état haut du capteur 18 correspond à une tension inférieure à la tension d'alimentation de la roue, par exemple 15V si la roue est alimentée par 24V en continu. Ainsi, si le détecteur 29 détecte une tension de 0V ou une tension de 24V, cela signifie que les capteurs 18, 20, 22 ne fonctionnent pas correctement.

En variante, le détecteur 29 est propre à détecter une panne latente du déphasage.

Selon encore une autre variante, il est propre à détecter une panne latente du rapport cyclique des capteurs.

A titre d'exemple, le dispositif 30 comprend une machine d'états 32 et un comparateur 34. La machine d'états 32 est propre à détecter les différents états logiques des capteurs 18, 20 et 22 de détection. La machine d'états 32 est reliée au comparateur 34 qui est propre à effectuer des comparaisons entre les états détectés par la machine d'états 32 et des états préenregistrés. Les états préenregistrés dépendent du mode de réalisation considéré. En référence aux figures 3 et 4, trois exemples seront donnés. En outre, le dispositif 30 comprend un moyen 36 de calcul de l'angle entre les capteurs 18, 20 et 22 et du rapport cyclique de chacun des signaux délivrés par les capteurs 18, 20 et 22.

Le dispositif 30 comporte également une unité de calcul 38 calculant les valeurs dites $H^+(n)$ et $H^-(n)$ définies comme :

$$H^+(n) = (Etat_n = E_n). (Etat_{n-1} = E_{(n-2)[6]+1}) .( Etat_{n-2} = E_{(n-3)[6]+1}).$$

et

$$H^-(n) = (Etat_n = E_n). (Etat_{n-1} = E_{(n)[6]+1}) .( Etat_{n-2} = E_{(n+1)[6]+1}).$$

Où n est un entier variant entre 1 et 6, le signe « . » est le signe de l'opération logique « et », [-] désigne un modulo et $Etat_n$ désigne l'état dans lequel est la roue est.

Selon l'exemple de la figure 2, au passage à l'état $E_1$, une oscillation dans la détection du premier capteur 18 a lieu. Cela se traduit par une alternance rapide d'un front montant, d'un front descendant et d'un front montant dans le signal de la courbe 24. Ainsi, il y a un passage rapide de l'état $E_1$ à l'état $E_6$ puis retour à l'état $E_1$. L'avantage de la formulation des valeurs $H^+(n)$ et $H^-(n)$ proposée avec un test sur trois états successifs est de pouvoir s'affranchir de tels phénomènes (aussi appelés par le terme anglais « glitch ») dans le compte des tours. En effet, avec les expressions ci-dessus, ni la valeur $H^+(n)$ ni la valeur $H^-(n)$ ne passe à l'état logique « 1 » en présence d'une oscillation d'un capteur.

Selon un exemple, la somme algébrique de ces deux valeurs $H^+(n)$ et $H^-(n)$ est calculée dans le compteur de roue 40.

Selon un autre exemple, le compteur de roue 40 compte le nombre d'occurrence d'un « 1 » sur les deux valeurs $H^+(n)$ et $H^-(n)$.

Ces valeurs $H^+(n)$ et $H^-(n)$ servent à la détermination de la position du train. Il est connu de l'état de la technique de passer de huit valeurs successives de $H^+$ et $H^-$ à la position du train. Il est effectivement possible de démontrer l'existence d'une bijection entre huit valeurs $H^+(n)$ et $H^-(n)$ et les positions du train.

Les valeurs $H^+(n)$ et $H^-(n)$ permettent également de déterminer l'accélération du train.

En variante, de manière plus élaborée, le système 10 comporte six compteurs de roue, soit un compteur de roue pour chaque état $E_1$, $E_2$, $E_3$, $E_4$, $E_5$ et $E_6$ déterminant le nombre de passage par l'état. Cela permet d'obtenir une mesure avec un bruit plus faible et six fois plus d'informations. Cette variante est particulièrement favorable pour un train fonctionnant à vitesse relativement lente.

Ainsi que l'indiquent les traits 42, 43, 44, 45 et 46, les données issues respectivement du compteur de roue 40 de la machine d'état 32, du comparateur 34 des détecteurs 29 et du moyen 36 sont conduites vers un calculateur 48 pouvant interpréter ces données et, le cas échéant, déterminer les actions à accomplir.

Le calculateur 48 est ainsi propre à signaler une erreur sur les états de la machine 32, prévenir une panne latente qui résulterait par exemple d'un mauvais rapport cyclique pour un capteur ou avertir d'une accélération trop forte. Une accélération trop importante correspond à une situation anormale.

L'ordinogramme de la figure 3 illustre schématiquement la mise en oeuvre d'un exemple de procédé de contrôle par le dispositif 30 selon un premier mode de réalisation.

Le procédé comprend une étape S50 de détection d'états correspondants aux signaux délivrés par les trois capteurs 18, 20 et 22. La détection se fait, par exemple, par une acquisition à chaque changement d'états.

En variante, l'acquisition se fait en continu. Selon l'exemple de la figure 1, l'acquisition est faite par le dispositif 30. Dans le cas d'une acquisition en continu, un système dérivateur est utilisé pour détecter les changements d'états. Cela évite, pour un fonctionnement lent, que les conditions $H^+(n)$ et $H^-(n)$ ne soient jamais remplies alors que la roue fait un tour complet.

Le procédé comprend aussi une étape S52 de comparaison des états détectés avec les valeurs des états de l'ensemble d'états possibles. Dans l'exemple de la figure 1, cela signifie qu'il est vérifié si trois signaux d'absence de dents 14 ou trois signaux de présence de dents 14 ont été détectés. En notant $E_7$ et $E_8$ les états correspondants, le tableau 2 suivant donnant les états permis et interdits est mémorisé dans le comparateur 34 :

*Tableau 2 : Valeurs logiques des capteurs 18, 20 et 22 en fonction des états déterminés (premier mode de réalisation) ainsi que leur statut.*

| Etat | C1 | C2 | C3 | Statut |
|---|---|---|---|---|
| $E_1$ | 1 | 0 | 1 | permis |
| $E_2$ | 1 | 0 | 0 | permis |
| $E_3$ | 1 | 1 | 0 | permis |
| $E_4$ | 0 | 1 | 0 | permis |
| $E_5$ | 0 | 1 | 1 | permis |
| $E_6$ | 0 | 0 | 1 | permis |
| $E_7$ | 0 | 0 | 0 | interdit |
| $E_8$ | 1 | 1 | 1 | interdit |

Selon ce mode de réalisation, les états préenregistrés du comparateur 34 sont les états $E_1$, $E_2$, $E_3$, $E_4$, $E_5$, $E_6$, $E_7$ et $E_8$. Le comparateur 34 compare l'état détecté aux huit états précités. Lorsque l'état détecté n'est pas un des six états permis, à savoir un des états $E_1$, $E_2$, $E_3$, $E_4$, $E_5$ ou $E_6$, une anomalie de fonctionnement du système 10 (étape S54) est renvoyée et le calculateur 48 détecte une anomalie. La comparaison de l'étape S52 s'effectue, par exemple, en déterminant si l'état détecté fait partie des états interdits.

Le graphe de la figure 2 montre que la succession des états logiques $E_1$, $E_2$, $E_3$, $E_4$, $E_5$ et $E_6$ n'est pas quelconque en fonctionnement normal. En l'occurrence, il est seulement permis de passer d'un état En à un état $E_{n+1}$ ou à un état $E_{n-1}$ en fonction du sens de rotation de la roue. Notamment, un passage d'un état En à un état $E_{n+2}$ n'est pas permis. Il en résulte que l'ensemble des six états logiques $E_1$, $E_2$, $E_3$, $E_4$, $E_5$ et $E_6$ est régi par des relations de passages.

Selon l'exemple de la figure 3, le procédé comporte une étape S56 de vérification de la conformité de la succession des états détectés avec les relations de passages des états en fonctionnement normal du système 10. Cela signifie qu'il est testé pour les deux états détectés $E_{D1}$ et $E_{D2}$ si D2 est égal à la somme de 1 avec l'expression D1 moins 1 plus ou moins 1 modulo 6. Ceci s'exprime mathématiquement par :

$$D2 = (D1 - 1 \pm 1)\,[6] + 1 \text{ (relation 1)}$$

Cette relation 1 peut également s'exprimer sous la forme de deux relations.

$$D2 = D1\,[6] + 1 \text{ (relation 2)}$$

ou

$$D2 = (D1 - 2)\,[6] + 1 \text{ (relation 3)}$$

Où [ ] désigne un modulo.

Les relations 2 et 3 sont les deux relations de passages pour le premier mode de réalisation. Elles impliquent en particulier qu'un passage de l'état En à l'état $E_{(n-3)[6]+1}$ n'est pas permis.

Dans le cas où la succession des états détectés n'est pas conforme à ces relations, à l'étape S58, une anomalie de fonctionnement du système 10 est renvoyée. A titre d'exemple, un passage de l'état $E_1$ (C1 = 1, C2 = 0, C3 = 1) à l'état $E_4$ (C1 = 0, C2 = 1, C3 = 0) entraîne la détection d'une anomalie de fonctionnement à l'étape S58. En effet, 4 = 3 + 1 ou 4 = 5 - 1, ce qui implique qu'aucune des deux relations 2 ou 3 n'est remplie.

Selon l'exemple de la figure 3, les tests des étapes S52 et S56 sont successifs. Ainsi, si la comparaison de l'étape S52 conduit à la détection d'une anomalie, le test de l'étape S56 n'est pas mené. Lors du test de l'étape S56, soit une anomalie est détectée, ce qui correspond à l'étape S58, soit aucune anomalie n'est détectée (étape S60)

Après les étapes 54, 58 ou 60, le procédé comporte également une étape S62 de détermination de l'état de fonctionnement du système 10 en fonction des comparaisons effectuées. Il est déterminé un dysfonctionnement lorsqu'une anomalie a été renvoyée aux étapes S54 ou S58. Si aucune anomalie n'a été renvoyée, il est considéré que le système 10 de positionnement fonctionne correctement.

L'étape S62 est effectuée, selon l'exemple de la figure 1, par le calculateur 48.

En variante, il est considéré que les capteurs 18, 20 et 22 émettent trois signaux : les états logiques $Ci = 0$ et $Ci = 1$ déjà mentionnés et des fronts montants/descendants. Dans ce mode de réalisation, les fronts montants/descendants sont considérés comme les seuls états logiques. Le tableau 1 est ainsi modifié. Dans un souci de simplification, les nouveaux états sont notés $F_1$, $F_2$, $F_3$, $F_4$, $F_5$ et $F_6$. L'état $F_1$ correspond au triplet (C1 = front montant ou descendant, C2 = 0, C3 = 1) l'état $F_2$ au triplet (C1 = 1, C2 = 0, C3 = front montant ou descendant); l'état $F_3$ au triplet (C1 = 1, C2 = front montant ou descendant, C3 = 0) ; l'état $F_4$ au triplet (C1 = front montant ou descendant, C2 = 1, C3 = 0) ; l'état $F_5$ au triplet (C1 = 0, C2 = 1, C3 = front montant ou descendant) et l'état $F_6$ au triplet (C1 = 0, C2 = front montant ou descendant, C3 = 1). L'ensemble des états $F_1$ à $F_6$ forme l'ensemble des états logiques possibles des trois capteurs 18, 20 et 22 pour les différentes positions de la roue 12. L'ensemble des états peut être représenté sous la forme du tableau 3 suivant :

*Tableau 3 : Valeurs logiques de capteurs 18, 20 et 22 en fonction des états de roue 12 (deuxième mode de réalisation)*

| Etat | C1 | C2 | C3 |
|---|---|---|---|
| $F_1$ | front montant ou descendant | 0 | 1 |
| $F_2$ | 1 | 0 | front montant ou descendant |
| $F_3$ | 1 | Front montant ou descendant | 0 |
| $F_4$ | front montant ou descendant | 1 | 0 |
| $F_5$ | 0 | 1 | front montant ou descendant |
| $F_6$ | 0 | front montant ou descendant | 1 |

L'ordinogramme de la figure 4 illustre schématiquement la mise en oeuvre d'un exemple de procédé de contrôle selon ce deuxième mode de réalisation.

Le procédé comporte une étape de détection S50 qui comprend une étape S64 d'acquisition des signaux délivrés par les trois capteurs 18, 20 et 22.

L'étape S60 de détection comprend également une étape S64 de filtrage des signaux acquis.

Cette étape S64 se fait en ne sélectionnant que les signaux acquis en présence d'un front montant ou descendant sur l'un des trois signaux délivrés par les capteurs 18, 20 et 22. Cela permet de conserver le même état détecté $F_i$ au niveau du dispositif 30 de contrôle même en présence d'une oscillation du signal délivré par le capteur 18, 20 ou 22 au moment d'une transition entre deux états. Cela permet d'éviter les contraintes d'échantillonnage liées à la présence d'oscillations du signal délivré par le capteur 18, 20 ou 22.

Dans une variante préférée, l'étape S64 d'acquisition n'a lieu que pour un changement d'état.

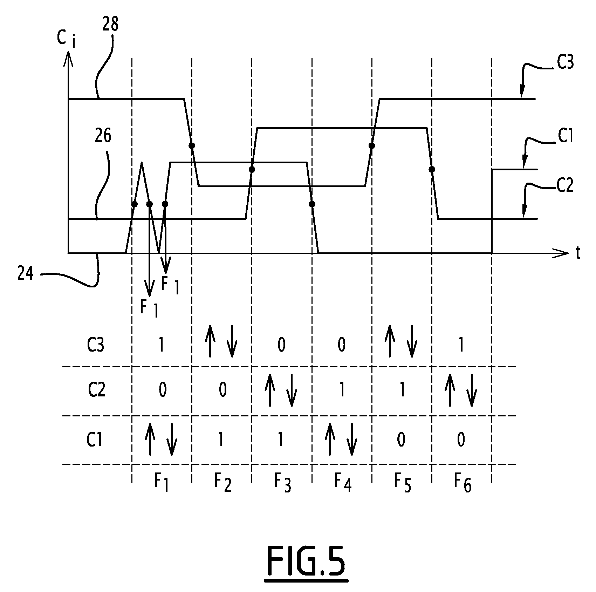

Selon l'exemple de la figure 5 qui correspond à celui de la figure 2, au passage à l'état $F_1$, une oscillation dans la détection du premier capteur 18 a lieu. Cela se traduit par une alternance rapide d'un front montant, d'un front descendant et d'un front montant dans le signal de la courbe 24. Néanmoins, dans la détection des états, comme un front montant ou un front descendant correspond au même état $F_1$, cette oscillation n'est pas présente.

Le procédé proposé dans le deuxième mode de réalisation n'est donc pas sensible aux oscillations de la détection des capteurs 18, 20 et 22.

Le procédé comprend aussi une étape S68 de comparaison des états détectés avec les valeurs des états de l'ensemble d'états possibles. L'étape S68 est similaire à l'étape S52 sauf que les états interdits sont différents. Le nouveau tableau 5 peut ainsi être dressé :

*Tableau 4 : Valeurs logiques des capteurs 18, 20 et 22 en fonction des états déterminés (deuxième mode de réalisation) ainsi que leur statut.*

| Etat | C1 | C2 | C3 | statut |
|---|---|---|---|---|
| $F_1$ | Front montant ou descendant | 0 | 1 | permis |
| $F_2$ | 1 | 0 | Front montant ou descendant | permis |

(suite)

| Etat | C1 | C2 | C3 | statut |
|------|----|----|----|--------|
| $F_3$ | 1 | Front montant ou descendant | 0 | permis |
| $F_4$ | Front montant ou descendant | 1 | 0 | permis |
| $F_5$ | 0 | 1 | Front montant ou descendant | permis |
| $F_6$ | 0 | Front montant ou descendant | 1 | permis |
| $F_7$ | Front montant ou descendant | 0 | 0 | interdit |
| $F_8$ | Front montant ou descendant | 1 | 1 | Interdit |
| $F_9$ | 0 | Front montant ou descendant | 0 | interdit |
| $F_{10}$ | 1 | Front montant ou descendant | 1 | interdit |
| $F_{11}$ | 0 | 0 | Front montant ou descendant | interdit |
| $F_{12}$ | 1 | 1 | Front montant ou descendant | interdit |
| $E_7$ | 0 | 0 | 0 | interdit |
| $E_8$ | 1 | 1 | 1 | interdit |

Selon ce deuxième mode de réalisation, les états préenregistrés du comparateur 34 sont donc différents du premier mode de réalisation. Ce sont les états $F_1$, $F_2$, $F_3$, $F_4$, $F_5$ et $F_6$.

Enfin, le procédé selon le deuxième mode de réalisation comporte les mêmes étapes S54, S56, S58, S60 et S62 qui sont similaires à celles mises en oeuvre pour le premier mode de réalisation. En particulier, le test mené à l'étape S56 est le même. Autrement dit, les relations de passages pour le deuxième mode de réalisation sont celles du premier (relations 2 et 3).

En outre, dans ce deuxième mode de réalisation, les valeurs H+(n) et H⁻(n) sont définies comme :

$$H^+(n) = (Etat_n = F_n). (Etat_{n-1} = F_{(n-2)[6]+1}) .( Etat_{n-2} = F_{(n-3)[6]+1}).$$

et

$$H^-(n) = (Etat_n = F_n). (Etat_{n-1} = F_{(n)[6]+1}) .( Etat_{n-2} = F_{(n)[6]+2}).$$

En variante, le procédé comporte une étape de détection d'un arrêt du train par un non changement d'état logique. Cela évite de mauvais diagnostics donnant un dysfonctionnement alors que le train est simplement arrêté.

Selon une autre variante, le procédé comporte une étape de détermination de l'état de fonctionnement du système 10 sur la base des données des détecteurs 29. Il est renvoyé une anomalie lorsque le détecteur 29 détecte que le capteur 18, 20 ou 22 associé fonctionne en circuit ouvert ou en court-circuit.

Selon un autre mode de réalisation, le procédé comporte une étape de comparaison de l'accélération du train avec une valeur seuil. Par exemple, cette valeur seuil est de 100 m.s⁻². Lorsque l'accélération mesurée est supérieure à la valeur seuil, il est renvoyé une anomalie de fonctionnement du système 10.

Le procédé permet ainsi de gérer en sécurité le système de positionnement avec sa roue 12 phonique dentée et ses trois capteurs 18, 20 et 22. En particulier, le procédé assure la détection de la plupart des anomalies. Il a ainsi été vérifié une détectabilité de la pannes à $10^{-9}$ pour la détection d'une, deux ou trois dents 14 figées, la détection d'une interférence parasite entre les signaux délivrés par deux capteurs 18, 20 ou 22 induisant une fausse détection pour une ou deux dents 14, la mémorisation d'un état, la mémorisation répétée d'un état et la détection d'une, deux ou trois dents 14 aléatoires. La seule situation qui n'est pas détectée avec certitude est une situation d'arrêt sur un état possible. Toutes les autres défaillances sont rapidement détectées. De ce fait, le procédé est bien conforme avec la norme de sécurité SIL4.

Un tel contrôle du fonctionnement du système 10 de positionnement du train évite l'usage d'un quatrième capteur de détection de la présence d'une dent pour effectuer un contrôle de cohérence. En outre, le procédé permet de supprimer l'emploi d'une fonction de test destinée à vérifier le bon fonctionnement des trois capteurs.

Le procédé n'est pas sensible aux rebonds des capteurs 18, 20 et 22.

Le procédé permet également d'améliorer la précision sur la position du train à l'arrêt. La position est détectée avec une précision six fois meilleure que lorsqu'un contrôle de cohérence avec un quatrième capteur est utilisé.

## Revendications

1. Procédé de contrôle du fonctionnement d'un système (10), le système (10) comportant :

   - une roue (12) phonique dentée,
   - un premier capteur (18) de détection de la présence d'une dent,
   - un deuxième capteur (20) de détection de la présence d'une dent,
   - un troisième capteur (22) de détection de la présence d'une dent, les trois capteurs (18, 20, 22) étant agencés spatialement de manière à ce qu'au moins six positions possibles et différentes de la roue (12) soient représentables par au moins six états logiques ($E_1$, $E_2$, $E_3$, $E_4$, $E_5$, $E_6$; $F_1$, $F_2$, $F_3$, $F_4$, $F_5$, $F_6$) possibles des trois capteurs (18, 20, 22), les six états ($E_1$, $E_2$, $E_3$, $E_4$, $E_5$, $E_6$; $F_1$, $F_2$, $F_3$, $F_4$, $F_5$, $F_6$) étant différents,

   le procédé comportant les étapes de :

   - détection d'états correspondants aux signaux délivrés par les trois capteurs (18, 20, 22),
   - comparaison des états détectés avec les six états logiques possibles ($E_1$, $E_2$, $E_3$, $E_4$, $E_5$, $E_6$; $F_1$, $F_2$, $F_3$, $F_4$, $F_5$, $F_6$),
   - détermination de l'état de fonctionnement du système (10) en fonction de la comparaison.

2. Procédé selon la revendication 1, dans lequel il est renvoyé une anomalie de fonctionnement du système (10) à l'étape de détermination lorsque l'état détecté n'est pas un des six états logiques ($E_1$, $E_2$, $E_3$, $E_4$, $E_5$, $E_6$; $F_1$, $F_2$, $F_3$, $F_4$, $F_5$, $F_6$).

3. Procédé selon la revendication 1 ou la revendication 2, dans lequel le passage d'un état logique ($E_1$, $E_2$, $E_3$, $E_4$, $E_5$, $E_6$; $F_1$, $F_2$, $F_3$, $F_4$, $F_5$, $F_6$) à un autre est régi par des relations de passage et le procédé comporte en outre une étape de vérification de la conformité de la succession des états détectés avec les relations de passage.

4. Procédé selon la revendication 3, dans lequel il est renvoyé une anomalie de fonctionnement du système (10) à l'étape de détermination lorsque la succession des états détectés n'est pas conforme aux relations de passage.

5. Procédé selon l'une des revendications 3 ou 4, dans lequel les six états logiques consécutifs sont repérés par des entiers successifs, les relations de passages étant $D2 = (D1 - 1 \pm 1) [6] + 1$ avec D1 et D2 les numéros des états détectés et [ ] est l'opération mathématique modulo.

6. Procédé selon l'une quelconque des revendications 1 à 5, dans lequel chaque capteur présente un rapport cyclique, le premier capteur (18) et le deuxième capteur (20) sont décalés d'un premier décalage (D1) par rapport à une dent dans un sens de rotation, le deuxième capteur (20) et le troisième capteur (22) sont décalés d'un deuxième décalage (D2) par rapport à une dent dans le même sens de rotation chaque décalage vaut $120° \pm x$, x étant compris entre 0 et 60°.

7. Procédé selon la revendication 6, dans lequel le rapport cyclique de chaque capteur (18, 20, 22) est compris entre $(180 - x)/360$ et $(180 + x)/360$.

8. Procédé selon l'une quelconque des revendications 1 à 7, dans lequel l'étape de détection d'un état se déclenche en présence d'un front montant ou descendant sur l'un des trois signaux délivrés par les capteurs (18, 20, 22).

**9.** Procédé selon l'une quelconque des revendications 1 à 8, dans lequel les états possibles ($E_1$, $E_2$, $E_3$, $E_4$, $E_5$, $E_6$; $F_1$, $F_2$, $F_3$, $F_4$, $F_5$, $F_6$), sont représentés par un triplet de valeurs correspondants aux états logiques des capteurs (18, 20, 22).

**10.** Procédé selon la revendication 9, dans lequel les états logiques des capteurs (18, 20, 22) comprennent un état haut et un état bas.

**11.** Procédé selon la revendication 9, dans lequel chaque triplet de valeurs inclut un front montant ou descendant pour une valeur, un état haut ou un état bas pour les autres valeurs.

**12.** Procédé selon l'une des revendications 1 à 11, dans lequel le système (10) comporte en outre au moins un détecteur (29) de l'état de fonctionnement des capteurs (18, 20, 22) et dans lequel il est renvoyé une anomalie de fonctionnement du système (10) à l'étape de détermination lorsque le détecteur (29) détecte un dysfonctionnement d'un des capteurs (18, 20, 22).

**13.** Procédé selon l'une des revendications 1 à 12, dans lequel le système (10) est un système de positionnement d'un train et comporte en outre au moins un moyen de mesure de l'accélération du train et dans lequel il est renvoyé une anomalie de fonctionnement du système (10) à l'étape de détermination lorsque l'accélération mesurée par le moyen de mesure est supérieure à une valeur seuil.

**14.** Système (10) comportant :

- une roue (12) phonique dentée,
- un premier capteur (18) de détection de la présence d'une dent,
- un deuxième capteur (20) de détection de la présence d'une dent,
- un troisième capteur (22) de détection de la présence d'une dent, les trois capteurs (18, 20, 22) étant agencés spatialement de manière à ce qu'au moins six positions possibles et différentes de la roue (12) soient représentables par au moins six états logiques ($E_1$, $E_2$, $E_3$, $E_4$, $E_5$, $E_6$; $F_1$, $F_2$, $F_3$, $F_4$, $F_5$, $F_6$) possibles des trois capteurs (18, 20, 22), les six états ($E_1$, $E_2$, $E_3$, $E_4$, $E_5$, $E_6$; $F_1$, $F_2$, $F_3$, $F_4$, $F_5$, $F_6$) étant différents,
- un dispositif (30) de contrôle du positionnement adapté à mettre en oeuvre le procédé selon l'une quelconque des revendications 1 à 13.

**15.** Véhicule comportant le système (10) de la revendication 14.

**Patentansprüche**

**1.** Verfahren zum Überprüfen des Betriebs eines Systems (10), wobei das System (10) aufweist:

- ein Inkrement-Zahnrad (12),
- einen ersten Sensor (18) zum Detektieren der Anwesenheit eines Zahnes
- einen zweiten Sensor (20) zum Detektieren der Anwesenheit eines Zahnes
- einen dritten Sensor (22) zum Detektieren der Anwesenheit eines Zahnes, wobei die drei Sensoren (18, 20, 22) derart räumlich angeordnet sind, dass mindestens sechs mögliche und unterschiedliche Positionen des Rads (12) durch mindestens sechs mögliche logische Zustände ($E_1$, $E_2$, $E_3$, $E_4$, $E_5$, $E_6$; $F_1$, $F_2$, $F_3$, $F_4$, $F_5$, $F_6$) der drei Sensoren (18, 20, 22) darstellbar sind, wobei die sechs Zustände ($E_1$, $E_2$, $E_3$, $E_4$, $E_5$, $E_6$; $F_1$, $F_2$, $F_3$, $F_4$, $F_5$, $F_6$) unterschiedlich sind,

wobei das Verfahren die Schritte aufweist:

- Detektieren von Zuständen, welche den von den drei Sensoren (18, 20, 22) gelieferten Signalen entsprechen,
- Vergleichen der detektierten Zustände mit den sechs möglichen logischen Zuständen ($E_1$, $E_2$, $E_3$, $E_4$, $E_5$, $E_6$; $F_1$, $F_2$, $F_3$, $F_4$, $F_5$, $F_6$),
- Bestimmen des Betriebszustands des Systems (10) abhängig von dem Vergleich.

**2.** Verfahren nach Anspruch 1, wobei es auf einen Funktionsfehler des Systems (10) bei dem Schritt des Bestimmens verweist, wenn der detektierte Zustand nicht einer der sechs logischen Zustände ($E_1$, $E_2$, $E_3$, $E_4$, $E_5$, $E_6$; $F_1$, $F_2$, $F_3$, $F_4$, $F_5$, $F_6$) ist.

3. Verfahren nach Anspruch 1 oder Anspruch 2, wobei die Umstellung von einem logischen Zustand ($E_1$, $E_2$, $E_3$, $E_4$, $E_5$, $E_6$; $F_1$, $F_2$, $F_3$, $F_4$, $F_5$, $F_6$) auf einem anderen durch Umstellungsverhältnisse geregelt wird und das Verfahren ferner einen Schritt des Überprüfens der Übereinstimmung der Reihenfolge der detektierten Zustände mit den Umstellungsverhältnissen aufweist.

4. Verfahren nach Anspruch 3, wobei es auf einen Funktionsfehler des Systems (10) bei dem Schritt des Bestimmens verweist, wenn die Reihenfolge der detektierten Zustände nicht den Umstellungsverhältnissen entspricht.

5. Verfahren nach einem der Ansprüche 3 oder 4, wobei die sechs aufeinanderfolgende logische Zustände durch aufeinanderfolgende ganze Zahlen gekennzeichnet sind, wobei die Umstellungsverhältnisse $D2 = (D1 - 1 \pm 1)$ [6] + 1 sind, wobei D1 und D2 die Zahlen der detektierten Zustände sind, und [ ] die mathematische Operation Modulo ist.

6. Verfahren nach einem der Ansprüche 1 bis 5, wobei jeder Sensor ein zyklisches Verhältnis aufweist, wobei der erste Sensor (18) und der zweite Sensor (20) um eine erste Verschiebung (D1) relativ zu einem Zahn in einer Drehrichtung versetzt sind, wobei der zweite Sensor (20) und der dritte Sensor (22) um eine zweite Verschiebung (D2) relativ zu einem Zahn in der gleichen Drehrichtung versetzt sind, wobei jede Verschiebung 120 ° $\pm$ x beträgt, wobei x zwischen 0 und 60 ° liegt.

7. Verfahren nach Anspruch 6, wobei das zyklische Verhältnis jedes Sensors (18, 20, 22) zwischen (180 - x) /360 und (180 + x) / 360 liegt.

8. Verfahren nach einem der Ansprüche 1 bis 7, wobei der Schritt des Detektierens eines Zustands in Gegenwart einer steigenden oder fallenden Flanke auf einem der drei durch die Sensoren (18, 20, 22) gelieferten Signale ausgelöst wird.

9. Verfahren nach einem der Ansprüche 1 bis 8, wobei die möglichen Zustände ($E_1$, $E_2$, $E_3$, $E_4$, $E_5$, $E_6$; $F_1$, $F_2$, $F_3$, $F_4$, $F_5$, $F_6$) durch eine Dreiergruppe von Werten entsprechend den logischen Zuständen der Sensoren (18, 20, 22) dargestellt sind.

10. Verfahren nach Anspruch 9, wobei die logischen Zustände der Sensoren (18, 20, 22) einen hohen Zustand und einen niedrigen Zustand aufweisen.

11. Verfahren nach Anspruch 9, wobei jede Dreiergruppe von Werten eine steigende oder fallende Flanke für einen Wert, einen hohen Zustand oder einen niedrigen Zustand für die anderen Werte enthält.

12. Verfahren nach einem der Ansprüche 1 bis 11, wobei das System (10) ferner mindestens einen Detektor (29) des Betriebszustands der Sensoren (18, 20, 22) aufweist und wobei es auf einen Funktionsfehler des Systems (10) bei dem Schritt des Bestimmens verweist, wenn der Detektor (29) eine Funktionsstörung eines der Sensoren (18, 20, 22) detektiert.

13. Verfahren nach einem der Ansprüche 1 bis 12, wobei das System (10) ein System zum Positionieren eines Zugs ist und ferner mindestens ein Mittel zum Messen der Beschleunigung des Zuges aufweist und wobei es auf einen Funktionsfehler des Systems (10) bei dem Schritt des Bestimmens verweist, wenn die durch das Mittel zum Messen gemessene Beschleunigung größer als ein Schwellenwert ist.

14. System (10) aufweisend:

    - ein Inkrement-Zahnrad (12),
    - einen ersten Sensor (18) zum Detektieren der Anwesenheit eines Zahnes
    - einen zweiten Sensor (20) zum Detektieren der Anwesenheit eines Zahnes
    - einen dritten Sensor (22) zum Detektieren der Anwesenheit eines Zahnes, wobei die drei Sensoren (18, 20, 22) so räumlich angeordnet sind, dass mindestens sechs mögliche und unterschiedliche Positionen des Rads (12) durch mindestens sechs mögliche logische Zustände ($E_1$, $E_2$, $E_3$, $E_4$, $E_5$, $E_6$; $F_1$, $F_2$, $F_3$, $F_4$, $F_5$, $F_6$) der drei Sensoren (18, 20, 22) darstellbar sind, wobei die sechs Zustände ($E_1$, $E_2$, $E_3$, $E_4$, $E_5$, $E_6$; $F_1$, $F_2$, $F_3$, $F_4$, $F_5$, $F_6$) unterschiedlich sind,
    - eine Vorrichtung (30) zum Überprüfen der Positionierung, welche eingerichtet ist, das Verfahren nach einem der Ansprüche 1 bis 13 durchzuführen.

**15.** Fahrzeug aufweisend das System (10) nach Anspruch 14.

**Claims**

**1.** A method for controlling the operation of a positioning system (10) of a train, the system (10) including:

- a toothed tone wheel (12),
- a first sensor (18) for detecting the presence of a tooth,
- a second sensor (20) for detecting the presence of a tooth,
- a third sensor (22) for detecting the presence of a tooth, the three sensors (18, 20, 22) being spatially arranged so that at least six possible and different positions of the wheel (12) may be represented by at least six possible logic states ($E_1$, $E_2$, $E_3$, $E_4$, $E_5$, $E_6$; $F_1$, $F_2$, $F_3$, $F_4$, $F_5$, $F_6$) of the three sensors (18, 20, 22), the six states ($E_1$, $E_2$, $E_3$, $E_4$, $E_5$, $E_6$; $F_1$, $F_2$, $F_3$, $F_4$, $F_5$, $F_6$) being different,

the method including a step for:

- detecting states corresponding to the signals delivered by the three sensors (18, 20, 22),
- comparing the detected states with the six possible logic states ($E_1$, $E_2$, $E_3$, $E_4$, $E_5$, $E_6$; $F_1$, $F_2$, $F_3$, $F_4$, $F_5$, $F_6$),
- determining the operation state of the system (10) according to the comparison.

**2.** The method according to claim 1, wherein an operating abnormality of the system (10) in the determination step is sent back when the detected state is not one of the six logic states ($E_1$, $E_2$, $E_3$, $E_4$, $E_5$, $E_6$; $F_1$, $F_2$, $F_3$, $F_4$, $F_5$, $F_6$).

**3.** The method according to claim 1 or claim 2, wherein the switching from a logic state ($E_1$, $E_2$, $E_3$, $E_4$, $E_5$, $E_6$; $F_1$, $F_2$, $F_3$, $F_4$, $F_5$, $F_6$) to another is governed by switching relationships and the method further includes a step for checking the compliance of the succession of the detected states with the switching relationships.

**4.** The method according to claim 3, wherein an operating abnormality of the system (10) in the determination step is sent back when the succession of the detected states is not compliant with the switching relationships.

**5.** The method according to any one of claims 3 or 4, wherein the six consecutive logic states are marked with successive integers, the switching relationships being D2 = (D1 - 1 $\pm$ 1) [6] +1 with D1 and D2 being the numbers of the detected states and [ ] is the mathematical modulo operation.

**6.** The method according to any one of claims 1 to 5, wherein each sensor has a duty cycle, the first sensor (18) and the second sensor (20) are shifted by a first shift (D1) relatively to a tooth in a direction of rotation, the second sensor (20) and the third sensor (22) are shifted by a second shift (D2) relatively to a tooth in the same direction of rotation, each shift has the value 120° $\pm$ x, x being comprised between 0 and 60°.

**7.** The method according to claim 6, wherein the duty cycle of each sensor (18, 20, 22) is comprised between (180-x)/360 and (180 + x)/360.

**8.** The method according to any one of claims 1 to 7, wherein the step for detecting a state is triggered in the presence of a rising or falling edge on one of the three signals delivered by the sensors (18, 20, 22).

**9.** The method according to any one of claims 1 to 8, wherein the possible states ($E_1$, $E_2$, $E_3$, $E_4$, $E_5$, $E_6$; $F_1$, $F_2$, $F_3$, $F_4$, $F_5$, $F_6$), are represented by a triplet of values corresponding to the logic states of the sensors (18, 20, 22).

**10.** The method according to claim 9, wherein the logic states of the sensors (18, 20, 22) comprise a high state and a low state.

**11.** The method according to claim 9, wherein each triplet of values includes a rising or falling edge for a value, a high state or a low state for the other values.

**12.** The method according to any one of claims 1 to 11, wherein the system (10) further includes at least one detector (29) for the operating state of the sensors (18, 20, 22) and wherein an operating abnormality of the system (10) in the determination step is sent back when the detector (29) detects a malfunction of one of the sensors (18, 20, 22).

**13.** The method according to any one of claims 1 to 12, wherein the system (10) further includes at least one means for measuring the acceleration of the train and wherein an operating abnormality of the system (10) in the determination step is sent back when the acceleration measured by the measurement means is greater than a threshold value.

**14.** A positioning system (10) of a train including:

- a toothed tone wheel (12),
- a first sensor (18) for detecting the presence of a tooth,
- a second sensor (20) for detecting the presence of a tooth,
- a third sensor (22) for detecting the presence of a tooth, the three sensors (18, 20, 22) being spatially arranged so that at least six possible and different positions of the wheel (12) may be represented by at least six possible logic states ($E_1$, $E_2$, $E_3$, $E_4$, $E_5$, $E_6$; $F_1$, $F_2$, $F_3$, $F_4$, $F_5$, $F_6$) of the three sensors (18, 20, 22), the six states ($E_1$, $E_2$, $E_3$, $E_4$, $E_5$, $E_6$; $F_1$, $F_2$, $F_3$, $F_4$, $F_5$, $F_6$) being different,
- a device (30) for controlling the position adapted for applying the method according to any one of claims 1 to 13.

**15.** A railway vehicle including the positioning system (10) of claim 14.

## FIG.1

**FIG.2**

| | $E_1$ | $E_1$ | $E_2$ | $E_3$ | $E_4$ | $E_5$ | $E_6$ |
|------|-------|-------|-------|-------|-------|-------|-------|
| C3 | 1 1 | 1 | 0 | 0 | 0 | 1 | 1 |
| C2 | 0 0 | 0 | 0 | 1 | 1 | 1 | 0 |
| C1 | 1 0 | 1 | 1 | 1 | 0 | 0 | 0 |

**FIG.3**

**FIG.4**

| | $F_1$ | $F_2$ | $F_3$ | $F_4$ | $F_5$ | $F_6$ |
|------|-------|-------|-------|-------|-------|-------|
| C3 | 1 | ↑ ↓ | 0 | 0 | ↑ ↓ | 1 |
| C2 | 0 | 0 | ↑ ↓ | 1 | 1 | ↑ ↓ |
| C1 | ↑ ↓ | 1 | 1 | ↑ ↓ | 0 | 0 |

## FIG.5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1475292 A1